# EUROPÄISCHE PATENTSCHRIFT

(11) **EP 4 493 510 B1**
(45) Veröffentlichungstag und Bekanntmachung des Hinweises auf die Patenterteilung: **20.08.2025**
(21) Anmeldenummer: 23710902.0
(22) Anmeldetag: 15.03.2023
(51) Int. Cl.: C01B 3/08

(54) **VERFAHREN ZUR KONTINUIERLICHEN WASSERSTOFFERZEUGUNG DURCH MAGNESIUMHALTIGE BASISMATERIALIEN**
METHOD FOR THE CONTINUOUS PRODUCTION OF HYDROGEN BY MEANS OF MAGNESIUM-CONTAINING BASE MATERIALS
PROCÉDÉ DE GÉNÉRATION CONTINUE D'HYDROGÈNE AU MOYEN DE MATIÈRES DE BASE CONTENANT DU MAGNÉSIUM

(30) Priorität: 16.03.2022 EP 22162551
(43) Veröffentlichungstag der Anmeldung: 22.01.2025
(73) Patentinhaber: GRÜNLAND Innovations GmbH, 4551 Ried im Traunkreis (AT)
(72) Erfinder: FAHRNER, Daniel, 1130 Wien (AT); MÜHLBÖCK, Marlene, 4694 Ohlsdorf (AT)
(74) Vertreter: SONN Patentanwälte GmbH & Co KG
(86) Internationale Anmeldenummer: PCT/EP2023/056616
(87) Internationale Veröffentlichungsnummer: WO 2023/175008

(56) Entgegenhaltungen:
- EP-A1- 1 355 849
- WO-A1-01/68517
- WO-A1-2009/046471
- WO-A1-2017/025591
- CN-A- 103 787 273
- DE-T2- 60 127 823
- KUSHCH S D ET AL: "Hydrogen-generating compositions based on magnesium", INTERNATIONAL JOURNAL OF HYDROGEN ENERGY, ELSEVIER, AMSTERDAM, NL, vol. 36, no. 1, 25 June 2010 (2010-06-25), pages 1321 - 1325, XP028131075, ISSN: 0360-3199, [retrieved on 20100706], DOI: 10.1016/J.IJHYDENE.2010.06.115
- HIRAKI TAKEHITO ET AL: "Chemical equilibrium analysis for hydrolysis of magnesium hydride to generate hydrogen", INTERNATIONAL JOURNAL OF HYDROGEN ENERGY, vol. 37, no. 17, September 2012 (2012-09-01), AMSTERDAM, NL, pages 12114 - 12119, XP055960749, ISSN: 0360-3199, DOI: 10.1016/j.ijhydene.2012.06.012

## Beschreibung

Die Erfindung betrifft ein Verfahren und eine Vorrichtung zur Herstellung von Wasserstoff (H₂).

Wasserstoff, welcher seit einigen Jahrzenten im industriellen Bereich zur Erzeugung von Wärme verwendet wird, um CO₂-Emission zu reduzieren, und auch im mobilen Bereich zur Emissionsreduktion eingesetzt werden kann, sollte ebenfalls auf emissionsarme Weise erzeugt werden. Bei der chemischen Erzeugung von Wasserstoff durch das Verfahren der Hydrolyse ist es bekannt, dass ein Basismaterial, welches mit einem Trägerfluid (üblicherweise Wasser) oder einer pH-Wert senkenden Flüssigkeit vermengt wird, stark exotherm zu Wasserstoff und einem Produkt, welches abhängig vom Edukt-Basismaterial ist, reagiert. Das Edukt-Basismaterial kann auch Sekundärrohstoffen, welche im Zuge der Magnesium aufbereitenden Industrie anfallen, oder aus anderen Materialien, welche industriell nicht weiterverwendbar sind, wie beispielsweise Reststoffe, Zwischenprodukte oder Abfälle aus der Industrie, bestehen.

Das Edukt pH-Wert senkende Flüssigkeit ist insbesondere ein Wasser-Säure-Gemisch, wobei als Säure organische oder anorganische Säuren verwendet werden können. Die Senkung des pH-Wertes in der Flüssigkeit ist essentiell für die Reaktionskinetik der exothermen Reaktion.

Allgemein kann die Reaktion wie folgt beschrieben werden: Basismaterial + pH-Wert senkende Flüssigkeit = Reststoff + Wasserstoff + Energie.

Bei der Hydrolysereaktion mit Magnesium als Basismaterial wird Energie in Form von Wärme frei, die Reaktionsenthalpie ΔH_{R} entspricht rund 277 kJ/mol. Es ist bekannt, diese Reaktion in einem Rundkolben mit einem Flüssigkeitseinlass durchzuführen, wobei einmal bzw. batchweise eine bestimmte Menge an Edukten zugeführt werden. Solche Verfahren sind beispielsweise in Ouyang, L. et al. "Enhanced Hydrogen Generation Properties of MgH2-Based Hydrides by Breaking the Magnesium Hydroxide Passivation Layer" Energies 2015, 8, 4237-4252; in S.D. Kushch et al. "Hydrogengenerating compositions based on magnesium" International Journal of Hydrogen Energy, Volume 36, Issue 1, 2011, Pages 1321-1325; und in T. Tayeh, et al. "Production of hydrogen from magnesium hydrides hydrolysis" International Journal of Hydrogen Energy, Volume 39, Issue 7, 2014, Pages 3109-3117. T. Tayeh et al. diskutiert dabei die Reaktionskinetik in Abhängigkeit von der Partikelgröße und dem pH-Wert. S.D. Kushch beschreibt die Erzeugung von Wasserstoff mittels hochreinem Magnesium bzw. Magnesiumhybrid in Verbindung mit Glykolsäure, Manolsäure oder Zitronensäure. Außerdem beschreibt Takehito Hiraki, et al. "Chemical equilibrium analysis for hydrolysis of magnesium hydride to generate hydrogen" International Journal of Hydrogen Energy, Volume 37, Issue 17, 2012, Pages 12114-12119, die Auswirkung von verschiedenen pH-Wert senkenden Flüssigkeiten auf die Reaktionskinetik der Hydrolyse Reaktion.

Durch die Vermengung des Basismaterials im Rundkolben mit der pH-Wert senkenden Flüssigkeit kommt es zur Bildung von Wasserstoff. Dieser erzeugte Wasserstoff wird bei den bisherigen Versuchsaufbauten batchweise, gravimetrisch mittels eines Verdrängungsgefäßes gemessen. Es ist jedoch nicht möglich, kontinuierlich Basismaterial umzusetzen bzw. Wasserstoff zu erzeugen. Dies ist mit den bestehenden Versuchsaufbauten auch aufgrund der zu erwartenden Wärmeentwicklung im Rundkolben aufgrund der stark exothermen Reaktion nicht möglich. Außerdem müssen nachteiligerweise die bisher bekannten Versuchsaufbauten zur Zufuhr zusätzlicher Edukte geöffnet werden.

WO 2009/046471 beschreibt die Herstellung von Wasserstoff aus einer Suspension (enthaltend ein Metallpulver und ein polares Suspensionsmittel) und Wasser, welche voneinander getrennt gelagert und zur Reaktion in eine Reaktionskammer gefördert werden.

Es ist die Aufgabe der vorliegenden Erfindung einen oder mehrere der Nachteile des Standes der Technik zu lindern oder zu beseitigen. Insbesondere ist es eine Aufgabe der Erfindung, ein Verfahren und eine Vorrichtung bereitzustellen, mit der kontinuierlich Wasserstoff aus einem magnesiumhaltigen Basismaterial und einem Trägerfluid und weiteren Zusätzen hergestellt werden kann. Dies wird erzielt durch ein Verfahren zur Herstellung von Wasserstoff, aufweisend die Schritte:
- Vorsehen eines Basismaterials, das Magnesium aufweist;
- Vorsehen eines Trägerfluids, insbesondere Wasser;
- Vorsehen einer pH-Wert senkenden Flüssigkeit;
- Zusammenführen des Basismaterials und des Trägerfluids in einem Suspensionsbehälter zu Bildung einer Suspension;
- Zuführen der pH-Wert senkenden Flüssigkeit in einen Reaktor;
- kontinuierliches Zuführen der Suspension in den Reaktor;
- Auslassen des im Reaktor bei einer Reaktion des Basismaterials und der pH-Wert senkenden Flüssigkeit entstehenden Wasserstoffs aus dem Reaktor.

Weiters wird dies erzielt durch eine Vorrichtung zur Herstellung von Wasserstoff, aufweisend:
- einen Suspensionsbehälter, der eine Suspension aus einem Basismaterial, das Magnesium aufweist, und ein Trägerfluid, insbesondere Wasser, aufweist;
- ein Basismaterial-Förderelement zur Zufuhr von Basismaterial zum Suspensionsbehälter;
- ein Trägerfluid-Förderelement zur Zufuhr von Trägerfluid zum Suspensionsbehälter
- einen Vorratsbehälter, der eine pH-Wert senkende Flüssigkeit aufweist;
- einen Reaktor;
- ein Suspensions-Förderelement, das eingerichtet ist zur kontinuierlichen Zufuhr der Suspension vom Suspensionsbehälter zum Reaktor;
- ein Säure-Förderelement, das eingerichtet ist zur Zufuhr der pH-Wert senkenden Flüssigkeit zum Reaktor;
- wobei der Reaktor einen Gasauslass für im Reaktor bei einer Reaktion des Basismaterials und der pH-Wert senkenden Flüssigkeit entstehenden Wasserstoffs aufweist.

Vorteilhafterweise wird somit das Basismaterial bereits in einem Suspensionsbehälter mit dem Trägerfluid vermengt, um eine Suspension zu bilden. Dadurch kann einerseits das Basismaterial deutlich besser dosiert werden. Alternativ könnte das Basismaterial in Form eines Feststoffes dosiert werden - dies wäre zwar grundsätzlich möglich, ist jedoch bezüglich der Sicherheitseinrichtungen, insbesondere der Dichtheit, mit einem erhöhten Aufwand verbunden. Eine Reaktion im Suspensionsbehälter ist nur im geringen Ausmaß zu erwarten, da sich mit dem Trägerfluid eine Passivierungsschicht bildet, und weitere Reaktionen unterbunden werden. Vorzugsweise weist das Trägerfluid Zusatzstoffe (z.B. Öle und/oder Feststoffzusätze) auf, die eine Reaktion verhindern können. Andererseits können somit das Basismaterial und das Magnesium in Form der Suspension auf einfache Weise gleichzeitig dem Reaktor zugeführt werden. Durch die kontinuierliche Zuführung der Suspension in den Reaktor wird die kontinuierliche Reaktionsführung und somit die kontinuierliche Herstellung von Wasserstoff ermöglicht. Im Reaktor werden die Suspension und die pH-Wert senkende Flüssigkeit vermischt und Wasserstoff gebildet.

Das Trägerfluid (bzw. Fluid) weist insbesondere Wasser auf oder ist Wasser. Das Trägerfluid (als Edukt) weist vorzugsweise deionisiertes Wasser auf oder ist deinoisiertes Wasser. Alternativ kann beispielsweise auch Leitungswasser oder Meerwasser verwendet werden. Als Edukt Trägerfluid kann beispielsweise zur Anwendung kommen:
- Leitungswasser, mit einem pH-Wert von bevorzugt zwischen 6,5 und 8,5, besonders bevorzugt zwischen 7 und 7,5;
- Deionisiertes Wasser mit einem pH-Wert von bevorzugt zwischen 6,8 und 7,5;
- Meerwasser mit einem pH-Wert von bevorzugt zwischen 7,5 und 8,5, besonders bevorzugt zwischen 7,8 und 8,2. Vorzugsweise weist das Trägerfluid einen pH-Wert von größer 7 auf. Grundsätzlich ist es für die Reaktion förderlich, wenn der pH-Wert leicht sauer ist, da dies eine allfällig entstehende Passivierungsschicht besser löst als Trägerfluid/Wasser mit einem pH-Wert im leicht basischen Bereich.

Das Basismaterial (insbesondere das Magnesium, die Magnesiumlegierung bzw. die Sekundär-Magnesiumlegierung) hat eine Partikelgröße von bevorzugt zwischen 50 und 1200 µm, besonders bevorzugt zwischen 150 und 600 µm, noch mehr bevorzugt zwischen 200 und 350 µm.

Unter der Partikelgröße wird bevorzugt die mittlere Partikelgröße verstanden. Die mittlere Partikelgröße bezeichnet den D50-Wert der Partikelgrößenverteilung. Der D50-Wert bezeichnet den Wert, unter welchem sich 50% der Partikelgrößenverteilung befinden. Analog dazu können auch ein D10- und ein D90-Wert bestimmt werden, als die Werte, unter denen sich 10% bzw. 90% der Partikelgrößenverteilung befinden. Die Spanne ist ein Maß für die Breite der Partikelgrößenverteilung und kann bestimmt werden als Spanne = (D90 - D10) / D50.

Im Zusammenhang mit der vorliegenden Erfindung wird die Partikelgrößenverteilung, insbesondere die D50-, D10, und D90-Werte, vorzugsweise durch Laserbeugungs-Partikelgrößenanalyse bestimmt. Dabei entspricht die Partikelgröße vorzugsweise dem Äquivalentdurchmesser der beugungsgleichen Kugel. Die mittlere Partikelgröße entspricht vorzugsweise der volumenbasierten mittlere Partikelgröße, insbesondere dem D50-Wert einer volumetrischen Partikelgrößenverteilung. Vorzugsweise wird die Laserbeugungs-Partikelgrößenanalyse gemäß der Norm ISO 13320:2020 durchgeführt.

Alternativ dazu kann die mittlere Partikelgröße auch durch Siebanalyse bestimmt werden. Der Fachmann ist mit der Durchführung einer solchen Analyse vertraut. Vorzugsweise wird die Siebanalyse durchgeführt gemäß der Deutschen Norm DIN 66165-1:2016 08.

Der Reaktor ist vorzugsweise ein Glas- oder Kunststoffreaktor. Diese sind aufgrund der Korrosionsbeständigkeit gegenüber Säuren bevorzugt. Der Reaktor weist vorzugsweise zumindest einen Einlass auf. Vorzugsweise werden die Suspension und die pH-Wert senkende Flüssigkeit dem Reaktor nicht durch denselben Einlass zugeführt. D.h., vorzugsweise wird die Suspension dem Reaktor durch einen ersten Einlass zugeführt und die pH-Wert senkende Flüssigkeit dem Reaktor durch einen zweiten (vom ersten Einlass getrennten) Einlass zugeführt. Vorzugsweise ist eine Leitung vorgesehen, die den Suspensionsbehälter mit dem Reaktor verbindet. Vorzugsweise ist eine Leitung vorgesehen, die den Vorratsbehälter mit dem Reaktor verbindet. Vorzugsweise ist ein Basismaterial-Behälter vorgesehen, der bevorzugt das Basismaterial aufweist. Vorzugsweise ist das Basismaterial-Förderelement zur Zufuhr von Basismaterial aus dem Basismaterial-Behälter zum Suspensionsbehälter eingerichtet. Vorzugsweise ist ein Trägerfluid-Behälter vorgesehen, der bevorzugt Trägerfluid aufweist. Vorzugsweise ist das Trägerfluid-Förderelement zur Zufuhr von Trägerfluid aus dem Trägerfluid-Behälter zum Suspensionsbehälter eingerichtet. Vorzugsweise ist der Suspensionsbehälter mit dem Reaktor über eine Leitung verbunden. Vorzugsweise ist der Vorratsbehälter mit dem Reaktor über eine Leitung verbunden. Vorzugsweise wird der gewonnene Wasserstoff direkt weiterverwendet, beispielsweise zur Stromgewinnung. Alternativ ist ein Wasserstoff-Sammelbehälter zum Sammeln des aus dem Gasauslass des Reaktors ausgelassenen Wasserstoffs vorgesehen.

Der Reaktor ist vorzugsweise ein CSR-Reaktor (continuous stirred reactor) und weist vorzugsweise einen Rührkessel auf. Der Reaktor weist ein freies Volumen von bevorzugt größer als 1 Liter, besonders bevorzugt größer als 5 Liter, auf. Die Reaktion im Reaktor erfolgt bei einem Überdruck von bevorzugt zumindest 0 barü, besonders bevorzugt bei einem Überdrück von 0,5 barü und/oder bei einem Überdruck von bevorzugt weniger als 10 barü, besonders bevorzugt weniger als 3 barü, noch mehr bevorzugt weniger als 1 barü. Das Basismaterial, insbesondere das Magnesium, liegt vorzugsweise nicht in hydrierter Form vor.

Das Basismaterial-Förderelement weist vorzugsweise eine Pumpe auf. Das Trägerfluid-Förderelement weist vorzugsweise eine Pumpe auf, insbesondere eine vorzugsweise drehzahlgesteuerte Förderpumpe. Der Trägerfluid-Behälter weist vorzugsweise einen Füllstandssensor auf, welcher den Füllstand des Trägerfluids im Trägerfluid-Behälter misst. Der Trägerfluid-Behälter weist vorzugsweise eine Wägeeinheit und/oder ein Auslassventil auf. Das Suspensions-Förderelement weist vorzugsweise eine Pumpe auf, insbesondere eine vorzugsweise drehzahlgesteuerte Schlauchquetschpumpe. Der Suspensionsbehälter weist vorzugsweise ein insbesondere drehzahlgesteuertes Rührwerk zum Rühren der Suspension im Suspensionsbehälter auf. Mit dem Rührwerk können das Trägerfluid und das Basismaterial vermischt werden. Somit kann eine homogene Mischung des Eduktes Trägerfluid mit dem Edukt Basismaterial, beides vermengt dann als Suspension bezeichnet, sichergestellt werden. Das insbesondere drehzahlgesteuerte Rührwerk kann mit konstanter Drehzahl betrieben werden. Die Drehzahl des Rührwerks liegt bevorzugt zwischen 30 und 600 min⁻¹, besonders bevorzugt zwischen 200 und 600 min⁻¹, besonders bevorzugt zwischen 250 und 400 min⁻¹. Der Suspensionsbehälter weist vorzugsweise einen Füllstandssensor zum Messen eines Füllstands der Suspension im Suspensionsbehälter und/oder eine Wägeeinheit zum Wägen der Suspension im Suspensionsbehälter und/oder ein Auslassventil auf. Das Säure-Förderelement weist vorzugsweise eine Pumpe auf, insbesondere eine Förderpumpe vorzugsweise mit einem Motor und/oder einer Drehzahlsteuerung. Der Vorratsbehälter weist vorzugsweise einen Füllstandssensor auf, welcher den Füllstand des Vorratsbehälters misst. Der Vorratsbehälter weist vorzugsweise eine Wägeeinheit auf. Der Vorratsbehälter weist vorzugsweise ein Auslassventil auf. Es ist vorzugsweise ein (Säure-)Temperatursensor vorgesehen, welcher eine Temperatur der pH-Wert senkenden Flüssigkeit im Vorratsbehälter und/oder im Säure-Förderelement messen kann. Die pH-Wert senkende Flüssigkeit weist vorzugsweise eine Säure auf. Der Reaktor weist vorzugsweise einen Eingangs-Temperatursensor zur Messung der Temperatur von zugeführtem Material, einen Ausgangs-Temperatursensor zur Messung der Temperatur von ausgetragenem Material, einen Reaktor-Temperatursensor zur Messung der Temperatur im Reaktor, einen Füllstandssensor, einen pH-Wert-Messsensor und/oder ein Überdruckventil, insbesondere ein elektrisch gesteuertes Überdruckventil und/oder eine Berstscheibe, auf.

Es ist vorteilhaft, wenn das Zuführen der pH-Wert senkenden Flüssigkeit zum Reaktor kontinuierlich erfolgt. Damit wird bei gleichzeitiger kontinuierlicher Zufuhr des Basismaterials die kontinuierliche Herstellung des Wasserstoffs verbessert. Im Unterschied zum Stand der Technik ist somit auch kein abwechselndes Zuführen und Abdichten notwendig.

Es ist bevorzugt, wenn das Verfahren weiter den Schritt aufweist:
- Rühren der Suspension und der pH-Wert senkenden Flüssigkeit im Reaktor mit einem Reaktormischer, wobei das Rühren vorzugsweise kontinuierlich durchgeführt wird und wobei vorzugsweise eine Drehzahl des Reaktormischers konstant ist.
Der Reaktormischer ist vorzugsweise ein insbesondere drehzahlgesteuertes Rührwerk. Der Reaktormischer rührt vorzugsweise kontinuierlich (insbesondere unterbrechungsfrei) und/oder mit konstanter Drehzahl. Der Reaktormischer dient der Vermischung der Suspension mit der pH-Wert senkenden Flüssigkeit und dazu, sicherzustellen, dass die chemische Reaktion im Reaktor vollständig umgesetzt wird. Das Rührwerk rührt vorzugsweise mit einer Basisdrehzahl von zumindest 100 min⁻¹, besonders bevorzugt zumindest 200 min⁻¹. Wenn ein Massenfluss des ausgelassenen Wasserstoffs einen bestimmen Massenfluss-Sollwert unterschreitet, kann die Drehzahl des Rührwerks erhöht werden, bevorzugt auf eine Drehzahl zwischen 300 und 550 min⁻¹, besonders bevorzugt auf eine Drehzahl zwischen 350 und 425 min⁻¹.

Es ist vorteilhaft, wenn eine Drehzahl des Reaktormischers geregelt wird, sodass die Reaktion des Basismaterials und der pH-Wert senkenden Flüssigkeit zu Wasserstoff mit einer vorbestimmten Reaktionsgeschwindigkeit abläuft. Vorzugsweise wird die Reaktionsgeschwindigkeit über den gemessenen aus dem Reaktor ausgelassenen Wasserstofffluss bestimmt, d.h. insbesondere definiert die Reaktionsgeschwindigkeit den Wasserstofffluss und die Rührgeschwindigkeit des Reaktormischers.

Es ist vorteilhaft, wenn das Verfahren weiter den Schritt aufweist:
- Bestimmen eines Massenflusses des aus dem Reaktor ausgeschiedenen Wasserstoffs. Damit ist es möglich, die Reaktion in Abhängigkeit vom Massenfluss des Wasserstoffes zu regeln. Es ist vorzugsweise ein Massendurchflussmesser zum Bestimmen des aus dem Gasauslass des Reaktors ausgeschiedenen Gases und/oder ein Wasserstoff-Gasreinheitssensor zur Bestimmung des Wasserstoff-Gehalts von aus dem Gasauslass des Reaktors ausgeschiedenen Gases. Vorzugsweise weist der Gasauslass des Reaktors einen Kondensat-Abscheider auf, welcher insbesondere Wassermoleküle entfernen soll. Vorzugsweise weist der Gasauslass des Reaktors einen Partikelfilter auf, der insbesondere dem Kondensat-Abscheider nachgeschaltet ist. Der Partikelfilter ist insbesondere zur Abscheidung von Feststoffpartikeln aus dem Gasstrom eingerichtet.

Es ist vorteilhaft, wenn der Massenfluss des aus dem Reaktor ausgeschiedenen Wasserstoffs zumindest durch Einstellen der Zufuhr der Suspension zum Reaktor gemäß einem Massenfluss-Sollwert geregelt wird. Vorzugsweise ist ein Regelkreis vorgesehen, wobei der Massenfluss des aus dem Reaktor ausgeschiedenen Wasserstoffs die Messgröße bzw. die Regelgröße, die Menge (d.h. der Massenfluss) an zugeführter Suspension die Stellgröße und ein Massenfluss-Sollwert die Führungsgröße darstellt. Der Massenfluss-Sollwert muss keine Konstante sein, sondern kann (insbesondere zeitlich) verändert werden. Vorzugsweise ist der Massenfluss-Sollwert jedoch zumindest über ein Zeitintervall konstant. Die Menge an zugeführter Suspension kann insbesondere mit der Drehzahl des Suspensions-Förderelements eingestellt werden.

Es ist vorteilhaft, wenn in Abhängigkeit von der Zufuhr der Suspension die Zufuhr der pH-Wert senkenden Flüssigkeit gesteuert wird. Die Menge (Masse) an zugeführter pH-Wert senkender Flüssigkeit ist vorzugsweise direkt proportional zur Menge (Masse) an zugeführter Suspension. Es gibt vorzugsweise einen bestimmten Faktor, der direkt proportional zum Massenfluss der Suspension ist.

Es ist bevorzugt, wenn bei der Reaktion im Reaktor entstehende Wärme abgeführt wird. Vorzugsweise wird eine Temperatur eines Mantels des Reaktors geregelt, wofür vorzugsweise mit einem Wärmetauscher Kühlfluid dem Mantel zugeführt wird und insbesondere eine Zulauftemperatur und/oder eine Ablauftemperatur des Wärmetauschers gemessen wird und/oder die Messgröße der Temperaturregelung darstellt. Ein Temperatur-Sollwert stellt insbesondere die Führungsgröße dar. Der Temperatur-Sollwert beträgt bevorzugt zwischen 45°C und 85°C, besonders bevorzugt zwischen 50°C und 80°C, noch mehr bevorzugt zwischen 55°C und 70°C. Die Kühlfluid-Zufuhr stellt insbesondere die Stellgröße dar. Damit kann die Wärme der exothermen Reaktion abgeführt werden.

Bevorzugt weist das Verfahren weiter den Schritt auf:
- Abscheiden von (insbesondere flüssigem und/oder festem) Reststoff aus dem Reaktor, insbesondere mittels eines Tauchrohrs im Reaktor. Der abgeschiedene Reststoff umfasst (zumindest teilweise) ausreagiertes Basismaterial und pH-Wert senkende Flüssigkeit. Diese sind insbesondere gelöst, d.h. der abgeschiedene Reststoff enthält bevorzugt (fast) keine Feststoffpartikel. Das Tauchrohr hat die Funktion, Flüssigkeit aus dem Reaktor zu leiten. Das reaktorseitige Ende des Tauchrohrs ist insbesondere unterhalb des Gasraumes im Reaktor angeordnet.

Vorteilhafterweise weist das Verfahren weiter den Schritt auf:
- Rezyklieren des Reststoffs in den Reaktor.
Alternativ kann der Schritt vorgesehen sein: Zuführen des Reststoffs zu einem Reststoffbehälter. Der Füllstand im Reststoffbehälter kann mit einem Reststoff-Füllstandmesser erfasst werden. Vorzugsweise ist eine Rückführung vorgesehen, um die pH-wert senkende Flüssigkeit und das (teilweise ausreagierte) Basismaterial wieder dem Reaktor zuzuführen. Damit kann können diese Stoffe wieder dem Reaktor zugeführt werden, um erneut als Reaktionspartner zur Verfügung zu stehen. Die Rezyklierungsrate beträgt bevorzugt zwischen 0% und 50% vom gesamten eingebrachten Massenstrom an Suspension und pH-Wert senkender Flüssigkeit.

Es ist vorteilhaft, wenn das Verfahren weiter den Schritt aufweist:
- Rühren des Basismaterials und des Trägerfluids im Suspensionsbehälter, insbesondere mit einem drehzahlgesteuerten Rührwerk.
Damit kann eine homogene Mischung des Eduktes Trägerfluid mit dem Edukt Basismaterial sichergestellt werden.

Es ist vorteilhaft, wenn ein Füllstand der Suspension im Suspensionsbehälter (insbesondere wiederholt oder fortlaufend) ermittelt wird und in Abhängigkeit des ermittelten Füllstands der Suspension, insbesondere bei Unterschreitung eines festgelegten Füllstandgrenzwerts, Basismaterial und/oder Trägerfluid dem Suspensionsbehälter zugeführt werden. Damit kann in weiterer Folge eine konstante Zufuhr von Suspension zum Reaktor sichergestellt werden.

Es ist vorteilhaft, wenn die Suspension dem Reaktor über ein Flutungs-3/2-Wege-Ventil zugeführt wird, wobei an das Flutungs-3/2-Wege-Ventil eine Wasserleitung zur Flutung des Reaktors angeschlossen ist. Somit kann im Fehlerfall der Reaktor mit Wasser (oder einem anderen Fluid) geflutet werden, sodass die Reaktion zum Erliegen kommt. Unter einem 3/2-Wege-Ventil wird ein Ventil mit (zumindest) drei Anschlüssen und zwei Schaltstellungen verstanden.

Es ist vorteilhaft, wenn die pH-Wert senkende Flüssigkeit aufweist:
- Zitronensäure in einer Konzentration von zwischen 6,4 und 32,0 Masseprozent,
- Essigsäure in einer Konzentration von zwischen 9,5 und 47,6 Masseprozent,
- Schwefelsäure in einer Konzentration von zwischen 4,3 und 21,9 Masseprozent,
- Salzsäure in einer Konzentration von zwischen 5,0 und 25,0 Masseprozent, oder
- Phosphorsäure in einer Konzentration von zwischen 2,9 und 14,4 Masseprozent. Die Angaben beziehen sich jeweils auf 100-%-ige Säure. Durch die Verdünnung der Säure kann eine Abschwächung der Reaktionskinetik erzielt werden, sodass die Reaktion besser beherrschbar ist.
Diese Werte haben in Experimenten besonders gute Umwandlungsraten in Wasserstoff gezeigt. Für die Reaktion ist insbesondere die Säurekonzentration bzw. wieviel Protonen die Säure enthält, also die Stoffmengenkonzentration (in mol/l) ausschlaggebend. Die vollständige Reaktion von Säure mit dem Basismaterial hat einen definierten stöchiometrischen Bedarf. Vorzugsweise wird die pH-Wert senkende Flüssigkeit überstöchiometrisch zugeführt, beispielsweise in einem Verhältnis ph-Wert senkende Flüssigkeit zu Basismaterial von zwischen 2:1 und 5:1 (pH-Wert senkende Flüssigkeit:Basismaterial).

Es ist bevorzugt, wenn der Perzentilwert d90 der Korngröße des Magnesiums des Basismaterials zwischen 50 und 1200 µm, bevorzugt von zwischen 150 und 600 µm, besonders bevorzugt von zwischen 200 und 350 µm, beträgt. d90 gibt die Größe an, unterhalb derer 90% der Partikel liegen. Diese wird vorzugsweise bestimmt gemäß DIN 66141:1974-02 oder DIN 66161.

Es ist vorteilhaft, wenn das Basismaterial aufweist:
- AZ91, AS31, AM50, AM 60, insbesondere in reiner Form; und/oder
- mehr als 90 Masseprozent Magnesium, bevorzugt mehr als 95 Masseprozent Magnesium, besonders bevorzugt mehr als 99 Masseprozent Magnesium; und/oder
- zwischen 10 und 99,5 Masseprozent, bevorzugt zwischen 20 und 85 Masseprozent, einer Magnesiumlegierung.

Es ist vorteilhaft, wenn als Magnesium des Basismaterials ein Sekundärrohstoff verwendet wird. D.h., es werden Magnesiumlegierungen verwendet, welche bereits einen Recycling- oder Aufbereitungsprozess durchlaufen sind.

Bezugnehmend auf die erfindungsgemäße Vorrichtung ist es vorteilhaft, wenn diese einen Reaktormischer zum Rühren der Suspension und der pH-Wert senkenden Flüssigkeit im Reaktor aufweist.

Es ist vorteilhaft, wenn ein Massendurchflussmesser zur Messung eines Massendurchflusses des Wasserstoffs mit dem Gasauslass des Reaktors verbunden ist.

Vorteilhafterweise weist die Vorrichtung eine Steuereinheit auf, die zur Durchführung des Verfahrens gemäß einer der hierin beschriebenen Ausführungsformen eingerichtet ist.

Bevorzugt ist ein Wärmetauscher-System mit einem Wärmetauscher vorgesehen, das dazu eingerichtet ist, einen Mantel des Reaktors mit einem Kühlfluid zu kühlen, wobei vorzugsweise ein Zulauf-Temperatursensor zur Messung einer Zulauftemperatur des Kühlfluids zum Wärmetauscher und/oder ein Ablauf-Temperatursensor zur Messung einer Ablauftemperatur des Kühlfluids vom Wärmetauscher vorgesehen sind.

Es ist vorteilhaft, wenn der Reaktor einen Auslass, insbesondere mit einem Tauchrohr, zum Ableiten von Reststoff aus dem Reaktor aufweist, wobei der Auslass mit einem Rückführ-3/2-Wege-Ventil verbunden ist, wobei das Reststoff-3/2-Wege-Ventil mit einer Rückführ-Leitung zum Rezyklieren von der pH-Wert senkenden Flüssigkeit zum Reaktor verbunden ist und mit einem Reststoff-Behälter verbunden ist.

Es ist vorteilhaft, wenn das Suspensions-Förderelement ein Flutungs-3/2-Wege-Ventil aufweist, an das eine Wasserleitung zur Flutung des Reaktors angeschlossen ist.

Im Folgenden wird die Erfindung anhand von einer in der Figur gezeigten bevorzugten Ausführungsform näher erläutert, auf die die Erfindung jedoch nicht beschränkt ist.

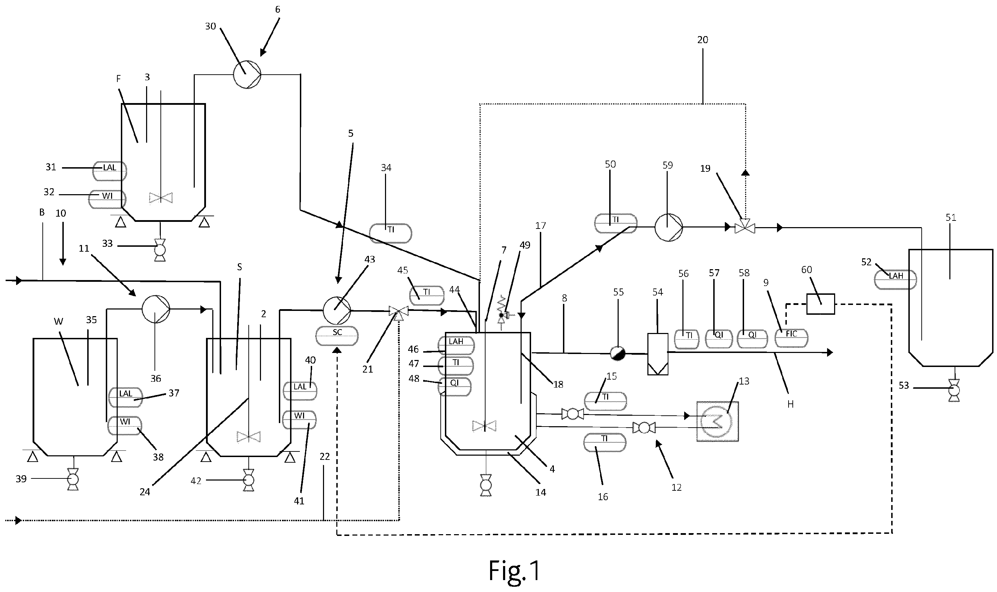

Fig. 1 zeigt schematisch eine bevorzugte Ausführungsform der Vorrichtung zur Herstellung von Wasserstoff.

Fig. 1 zeigt schematisch eine bevorzugte Ausführungsform der Vorrichtung 1 zur Herstellung von Wasserstoff H. (H wird als Bezugszeichen für Wasserstoff, also H₂, verwendet.) Die Vorrichtung 1 weist auf:
- einen Suspensionsbehälter 2, der eine Suspension S aus einem Basismaterial B, das Magnesium aufweist, und Trägerfluid W (insbesondere Wasser) aufweist;
- ein Basismaterial-Förderelement 10 zur Zufuhr von Basismaterial B zum Suspensionsbehälter 2 (wobei statt des Basismaterial-Förderelements 10 auch eine händische Zufuhr vorgesehen sein kann);
- ein Trägerfluid-Förderelement 11 zur Zufuhr von Trägerfluid W zum Suspensionsbehälter 2
- einen Vorratsbehälter 3, der eine pH-Wert senkende Flüssigkeit F aufweist;
- einen Reaktor 4, wobei der Reaktor 4 einen Gasauslass 8 für im Reaktor 4 bei einer Reaktion der Suspension S und der pH-Wert senkenden Flüssigkeit F entstehenden Wasserstoffs H aufweist;
- ein Suspensions-Förderelement 5, das eingerichtet ist zur kontinuierlichen Zufuhr der Suspension S vom Suspensionsbehälter 2 zum Reaktor 4;
- ein Säure-Förderelement 6, das eingerichtet ist zur Zufuhr der pH-Wert senkenden Flüssigkeit F zum Reaktor 4.

Das Säure-Förderelement 6 weist eine Förderpumpe 30 mit einem Motor und einer Drehzahlsteuerung auf. Der Vorratsbehälter 3 weist einen Säure-Füllstandssensor 31 zum Messen eines Füllstands der pH-Wert senkenden Flüssigkeit F im Vorratsbehälter 3, eine Säure-Wägeeinheit 32 zum Wägen der pH-Wert senkenden Flüssigkeit F im Vorratsbehälter 3 und ein Auslassventil 33 auf. Es ist ein Säure-Temperatursensor 34 vorgesehen, welcher die Temperatur der vom Säure-Förderelement 6 geleiteten pH-Wert senkenden Flüssigkeit F misst.

Die Vorrichtung 1 weist einen Trägerfluid-Behälter 35 zum Vorrätighalten von Trägerfluid W auf. Das Trägerfluid-Förderelement 11 ist zur Zufuhr von Trägerfluid W vom Trägerfluid-Behälter 35 zum Suspensionsbehälter 2 eingerichtet. Das Trägerfluid-Förderelement 11 weist eine drehzahlgesteuerte Förderpumpe 36 auf. Der Trägerfluid-Behälter 35 weist einen Trägerfluid-Füllstandssensor 37 zum Messen eines Füllstands des Trägerfluids W im Trägerfluid-Behälter 35, eine Trägerfluid-Wägeeinheit 38 zum Wägen des Trägerfluids W im Trägerfluid-Behälter 35 und ein Auslassventil 39 auf.

Die Vorrichtung 1 kann auch einen Basismaterial-Behälter zum Vorrätighalten von Basismaterial B aufweisen, der in dieser Ausführungsform jedoch nicht dargestellt ist. Die Basismaterial-Förderelement 10 ist dann zur Zufuhr von Basismaterial B vom Basismaterial-Behälter zum Suspensionsbehälter eingerichtet.

Der Suspensionsbehälter 2 weist ein drehzahlgesteuertes Rührwerk 24, einen Suspensions-Füllstandssensor 40 zum Messen eines Füllstands der Suspension S im Suspensionsbehälter 2, eine Suspension-Wägeeinheit 41 und ein Auslassventil 42 auf. Das Suspensions-Förderelement 5 weist eine drehzahlgesteuerte Schlauchquetschpumpe 43 auf. Außerdem weist das Suspensions-Förderelement 5 ein Flutungs-3/2-Wege-Ventil 21 auf, an das eine Wasserleitung 22 zur Flutung des Reaktors 4 angeschlossen ist. Das Suspensions-Förderelement 5 und damit auch das Flutungs-3/2-Wege-Ventil 21 sind mit einem Einlass 44 des Reaktors 4 verbunden.

Es ist ein insbesondere drehzahlgesteuerter Reaktormischer 7 zum Rühren der Suspension S und der pH-Wert senkenden Flüssigkeit F im Reaktor 4 vorgesehen und ein Eingangs-Temperatursensor 45 zur Messung der Temperatur der dem Reaktor 4 am Einlass 44 zugeführten Suspension S vorgesehen. Der Reaktor weist außerdem einen Reaktor-Füllstandssensor 46, einen Reaktor-Temperatursensor 47 zur Messung einer Temperatur im Reaktor 4, ein pH-Wert-Messsensor 48 zur Messung eines pH-Werts im Reaktor 4 und ein Überdruckventil 49 (sowie eine Druckmessung) auf.

Es ist ein Wärmetauscher-System 12 mit einem Wärmetauscher 13 vorgesehen. Das Wärmetauscher-System 12 ist dazu eingerichtet, einen Mantel 14 des Reaktors 4 mit einem Kühlfluid zu kühlen. Dafür ist ein Zulauf-Temperatursensor 15 zur Messung einer Zulauftemperatur des Kühlfluids zum Wärmetauscher 13 und ein Ablauf-Temperatursensor 16 zur Messung einer Ablauftemperatur des Kühlfluids vom Wärmetauscher 13 vorgesehen.

Der Reaktor weist einen Auslass 17 mit einem Tauchrohr 18 zum Ableiten von Reststoff aus dem Reaktor 4 auf. Der Auslass 17 ist mit einer drehzahlgesteuerten Förderpumpe 59 und mit einem Reststoff-3/2-Wege-Ventil 19 verbunden, wobei das Reststoff-3/2-Wege-Ventil 19 mit einer Rückführ-Leitung 20 zum Rezyklieren von Reststoff zum Reaktor 4 verbunden ist. Alternativ kann der Reststoff über das Reststoff-3/2-Wege-Ventil dem Reststoff-Behälter 51 zugeführt werden, der einen Reststoff-Füllstandssensor 52 zur Messung eines Füllstands des Reststoffs im Reststoff-Behälter 51 und ein Auslassventil 53 aufweist. Es ist ein Rückführ-Temperatursensor 50 zur Messung von aus dem Reaktor 4 ausgeschiedenem Reststoff vorgesehen.

Der Gasauslass 8 ist mit einem Kondensatabscheider 55, einem Partikelabscheider 54, einem Wasserstoff-Temperatursensor 56, einem Wasserstoff-(H₂-)Gasreinheitsensor 57, einem Kohlendioxid-(CO₂-)Gasreinheitssensor 58 und einem Massendurchflussmesser 9 zur Messung eines Massendurchflusses des Wasserstoffs H verbunden.

Der Betrieb der Vorrichtung 1 wird im Folgenden näher beschrieben. Es wird ein Basismaterial B, das Magnesium aufweist, (insbesondere im Basismaterial-Behälter) vorgesehen. Es wird Trägerfluid W im Trägerfluid-Behälter 35 vorgesehen. Mit dem Basismaterial-Förderelement 10 und dem Trägerfluid-Fördermittel 11 werden das Basismaterial B und das Trägerfluid W in dem Suspensionsbehälter 2 zur Bildung der Suspension S zusammengeführt. Das Basismaterial B und das Trägerfluid W werden im Suspensionsbehälter 2 mit dem Rührwerk 24 gerührt, um eine homogene Mischung des Trägerfluids W und des Basismaterials B zur Suspension S zu erzielen. Das Rührwerk 24 wird insbesondere mit konstanter Drehzahl betrieben. Durch das Einleiten des Trägerfluids W direkt in den Suspensionsbehälter 2 kann das Basismaterial B besser dosiert werden. Der Füllstand der Suspension S im Suspensionsbehälter 2 wird mit dem Suspensions-Füllstandssensor 40 fortlaufend oder wiederholt ermittelt. Bei Unterschreitung eines festgelegten Füllstandsgrenzwerts durch den gemessenen Füllstand wird Basismaterial B und Trägerfluid W dem Suspensionsbehälter mit dem Trägerfluid-Förderelement 11 und dem Basismaterial-Förderelement 10 zugeführt.

Es wird eine pH-Wert senkende Flüssigkeit F im Vorratsbehälter 3 vorgesehen. Über das Ablassventil 33 des Vorratsbehälters 3 kann im Fehlerfall, bei Service oder bei Wartung die pH-Wert senkende Flüssigkeit F aus dem Vorratsbehälter 3 abgelassen werden.

Die pH-Wert senkende Flüssigkeit F wird mit dem Säure-Förderelement 6 insbesondere kontinuierlich vom Vorratsbehälter 3 dem Reaktor 4 zugeführt. Über das Flutungs-3/2-Wege-Ventil 21 wird mit dem Suspensions-Förderelement 5 die Suspension S vom Suspensionsbehälter 2 kontinuierlich dem Reaktor 4 zugeführt. Die Suspension S und die pH-Wert senkende Flüssigkeit F reagieren im Reaktor 4, wobei Wasserstoff (H₂) H (und außerdem Reststoff und Wärme) entsteht. Damit kann eine kontinuierliche Wasserstofferzeugung erreicht werden, die auch skalierbar ist und ohne dass wie bei batchweisem Betrieb eine wiederholte Abdichtung und Öffnung des Reaktors 4 erforderlich ist. Die pH-Wert senkende Flüssigkeit F bricht insbesondere die Passivierung, die die Suspension S aus Basismaterial B und Trägerfluid W ausbildet. Der Reaktormischer 7 läuft vorzugsweise kontinuierlich und vermischt die Suspension S und die pH-Wert senkende Flüssigkeit. Der Reaktormischer 7 stellt also sicher, dass die chemische Reaktion im Reaktor 4 vollständig umgesetzt werden kann. Über das Flutungs-3/2-Wege-Ventil 21 kann im Fehlerfall der Reaktor mit Wasser geflutet werden, sodass die Reaktion gestoppt wird. Das Überdruckventil 49 ist als weitere Sicherheitseinrichtung vorgesehen. Das Überdruckventil 49 dient als Überdrucksicherung, falls der Reaktordruck unerwartet über einen Maximaldruck ansteigen sollte. Außerdem ist als Überdrucksicherung eine Berstscheibe am Reaktor 4 vorgesehen.

Der im Reaktor 4 bei der Reaktion des Basismaterials B und der pH-Wert senkenden Flüssigkeit F entstehende Wasserstoff H wird aus dem Reaktor 4 am Gasauslass 8 ausgelassen. Mit dem Kondensat-Abscheider 55 wird der (vollständig gesättigte) Wasserstoff H von flüssigen Wassermolekülen gereinigt. Mit dem Partikelfilter 54 werden Feststoffpartikel aus dem Gasstrom abgeschieden. Mit dem Wasserstoff-Gasreinheitsensor 57 und dem Kohlendioxid-Gasreinheitssensor 58 werden die Wasserstoff- und Kohlendioxid-Konzentration im Massenstrom gemessen. Dies dient als Indikator für die Umsetzungsrate der Hydrolysereaktion, insbesondere der Qualität des resultierenden Wasserstoffs. Mit dem Massendurchflussmesser 9 wird der Massenfluss des aus dem Reaktor 4 ausgeschiedenen Wasserstoffs bestimmt. Es wird ein Massenfluss-Sollwert vorgegeben und durch das Einstellen der Zufuhr der Suspension S zum Reaktor der Massenfluss des aus dem Reaktor 4 ausgeschiedenen Wasserstoffs H in einem Regelkreis auf den Massenfluss-Sollwert geregelt. Außerdem wird in Abhängigkeit von der Zufuhr der Suspension S die Zufuhr der pH-Wert senkenden Flüssigkeit F gesteuert. Der Massenstrom dient somit als Regelfeedback für die Zufuhr der Edukte in den Reaktor.

Der Reststoff mit dem (zumindest teilweise) ausreagiertem Basismaterial wird entweder dem Reststoffbehälter 23 zugeführt oder in den Reaktor 4 rezykliert.

Die Vorrichtung 1 weist auch eine Steuereinheit 60 auf, die zur Durchführung des Verfahrens (insbesondere des Regelkreises) mit der Vorrichtung 1 wie beschrieben eingerichtet ist. Die Steuereinheit 60 ist vorzugsweise zumindest mit dem Massendurchflussmesser 9 und dem Suspensions-Förderelement 5 verbunden (z.B. kabelgebunden oder über eine Drahtlosverbindung; in Fig. 1 strichliert eingezeichnet).

## Patentansprüche

1. Verfahren zur Herstellung von Wasserstoff (H), aufweisend die Schritte:
- Vorsehen eines Basismaterials (B), das Magnesium aufweist;
- Vorsehen eines Trägerfluids (W), insbesondere Wasser;
- Vorsehen einer pH-Wert senkenden Flüssigkeit (F);
- Zusammenführen des Basismaterials (B) und des Trägerfluids (W) in einem Suspensionsbehälter (2) zu Bildung einer Suspension (S);
- Zuführen der pH-Wert senkenden Flüssigkeit (F) in einen Reaktor (4);
- kontinuierliches Zuführen der Suspension (S) in den Reaktor (4);
- Auslassen des im Reaktor (4) bei einer Reaktion des Basismaterials (B) und der pH-Wert senkenden Flüssigkeit (F) entstehenden Wasserstoffs (H) aus dem Reaktor (4).

2. Verfahren nach einem der vorhergehenden Ansprüche, wobei das Zuführen der pH-Wert senkenden Flüssigkeit (F) zum Reaktor (4) kontinuierlich erfolgt.

3. Verfahren nach Anspruch 1 oder 2, wobei das Verfahren weiter den Schritt aufweist:
- Rühren der Suspension (S) und der pH-Wert senkenden Flüssigkeit (F) im Reaktor (4) mit einem Reaktormischer (7), wobei das Rühren vorzugsweise kontinuierlich durchgeführt wird und wobei vorzugsweise eine Drehzahl des Reaktormischers (7) konstant ist.

4. Verfahren nach Anspruch 3, wobei eine Drehzahl des Reaktormischers (7) geregelt wird, sodass die Reaktion des Basismaterials (b) und der pH-Wert senkenden Flüssigkeit (F) zu Wasserstoff (H) mit einer vorbestimmten Reaktionsgeschwindigkeit abläuft.

5. Verfahren nach einem der vorhergehenden Ansprüche, weiter aufweisend den Schritt:
- Bestimmen eines Massenflusses des aus dem Reaktor (4) ausgeschiedenen Wasserstoffs (H).

6. Verfahren nach Anspruch 5, wobei der Massenfluss des aus dem Reaktor (4) ausgeschiedenen Wasserstoffs (H) zumindest durch Einstellen der Zufuhr der Suspension (S) zum Reaktor (4) gemäß einem Massenfluss-Sollwert geregelt wird.

7. Verfahren nach einem der Ansprüche 5 oder 6, wobei in Abhängigkeit von der Zufuhr der Suspension (S) die Zufuhr der pH-Wert senkenden Flüssigkeit (F) gesteuert wird.

8. Verfahren nach einem der vorhergehenden Ansprüche, wobei bei der Reaktion im Reaktor (4) entstehende Wärme abgeführt wird, wofür vorzugsweise eine Temperatur eines Mantels (14) des Reaktors (4) geregelt wird, wofür vorzugsweise mit einem Wärmetauscher (13) Kühlfluid dem Mantel (14) zugeführt wird und insbesondere eine Zulauftemperatur und/oder eine Ablauftemperatur des Wärmetauschers (13) die Messgröße der Temperaturregelung darstellt.

9. Verfahren nach einem der vorhergehenden Ansprüche, weiter aufweisend die Schritte:
- Ableiten von Reststoff aus dem Reaktor (4), insbesondere mittels eines Tauchrohrs (18) im Reaktor (4)
- vorzugsweise Rezyklieren des abgeleiteten Reststoffs in den Reaktor (4).

10. Verfahren nach einem der vorhergehenden Ansprüche, wobei ein Füllstand der Suspension (S) im Suspensionsbehälter (2) ermittelt wird und in Abhängigkeit des ermittelten Füllstands der Suspension (S), insbesondere bei Unterschreitung eines festgelegten Füllstandgrenzwerts, Basismaterial (B) und/oder Trägerfluid (W) dem Suspensionsbehälter (2) zugeführt werden.

11. Verfahren nach einem der vorhergehenden Ansprüche, wobei die Suspension (S) dem Reaktor (4) über ein Flutungs-3/2-Wege-Ventil (21) zugeführt wird, wobei an das Flutungs-3/2-Wege-Ventil (21) eine Wasserleitung (22) zur Flutung des Reaktors (4) angeschlossen ist.

12. Vorrichtung (1) zur Herstellung von Wasserstoff (H), aufweisend:
- einen Suspensionsbehälter (2), der eine Suspension (S) aus einem Basismaterial (B), das Magnesium aufweist, und einem Trägerfluid (W), insbesondere Wasser, aufweist;
- ein Basismaterial-Förderelement (10) zur Zufuhr von Basismaterial (B) zum Suspensionsbehälter (2);
- ein Trägerfluid-Förderelement (11) zur Zufuhr von Trägerfluid (W) zum Suspensionsbehälter (2)
- einen Vorratsbehälter (3), der eine pH-Wert senkende Flüssigkeit (F) aufweist;
- einen Reaktor (4);
- ein Suspensions-Förderelement (5), das eingerichtet ist zur kontinuierlichen Zufuhr der Suspension (S) vom Suspensionsbehälter (2) zum Reaktor (4);
- ein Säure-Förderelement (6), das eingerichtet ist zur Zufuhr der pH-Wert senkenden Flüssigkeit (F) zum Reaktor (4);
- wobei der Reaktor (4) einen Gasauslass (8) für im Reaktor (4) bei einer Reaktion des Basismaterials (B) und der pH-Wert senkenden Flüssigkeit (F) entstehenden Wasserstoffs (H) aufweist.

13. Vorrichtung (1) nach Anspruch 12, wobei ein Massendurchflussmesser (9) zur Messung eines Massendurchflusses des Wasserstoffs (W) mit dem Gasauslass (8) des Reaktors (4) verbunden ist.

14. Vorrichtung (1) nach einem der Ansprüche 12 und 13, mit einer Steuereinheit, die zur Durchführung des Verfahrens nach einem der Ansprüche 1 bis 18 eingerichtet ist.

15. Vorrichtung (1) nach einem der Ansprüche 12 bis 14,
wobei der Reaktor einen Auslass (17), insbesondere mit einem Tauchrohr (18), zum Ableiten von Reststoff aus dem Reaktor (4) aufweist, wobei der Auslass (17) mit einem Reststoff-3/2-WegeVentil (19) verbunden ist, wobei das Reststoff-3/2-Wege-Ventil (19) mit einer Rückführ-Leitung (20) zum Rezyklieren von der pH-Wert senkenden Flüssigkeit zum Reaktor (4) und vorzugsweise mit einem Reststoff-Behälter (51) verbunden ist und/oder
wobei das Suspensions-Förderelement (5) ein Flutungs-3/2-Wege-Ventil (21) aufweist, an das eine Wasserleitung (22) zur Flutung des Reaktors (4) angeschlossen ist.

## Claims

1. A method for producing hydrogen (H), comprising the steps of:
- providing a base material (B) comprising magnesium;
- providing a carrier fluid (W), in particular water;
- providing a pH-lowering liquid (F);
- bringing together the base material (B) and the carrier fluid (W) in a suspension container (2) to form a suspension (S);
- supplying the pH-lowering liquid (F) to a reactor (4);
- continuously supplying the suspension (S) to the reactor (4);
- discharging the hydrogen (H) produced in the reactor (4) in a reaction of the base material (B) and the pH-lowering liquid (F) from the reactor (4).

2. The method according to any one of the preceding claims, wherein the supplying of the pH-lowering liquid (F) to the reactor (4) takes place continuously.

3. The method according to claim 1 or 2, wherein the method further comprises the step of:
- stirring the suspension (S) and the pH-lowering liquid (F) in the reactor (4) with a reactor mixer (7), wherein preferably the stirring is carried out continuously and wherein preferably a rotational speed of the reactor mixer (7) is constant.

4. The method according to claim 3, wherein a rotational speed of the reactor mixer (7) is controlled so that the reaction of the base material (b) and the pH-lowering liquid (F) to hydrogen (H) proceeds at a predetermined reaction rate.

5. The method according to any one of the preceding claims, further comprising the step of:
- determining a mass flow of the hydrogen (H) discharged from the reactor (4).

6. The method according to claim 5, wherein the mass flow of the hydrogen (H) discharged from the reactor (4) is controlled at least by adjusting the supply of the suspension (S) to the reactor (4) according to a mass flow setpoint.

7. The method according to any one of claims 5 or 6, wherein the supply of the pH-lowering liquid (F) is controlled as a function of the supply of the suspension (S).

8. The method according to any one of the preceding claims, wherein heat generated in the reactor (4) during the reaction is dissipated, for which purpose a temperature of a vessel wall (14) of the reactor (4) is preferably controlled, for which purpose cooling fluid is preferably supplied to the vessel wall (14) by means of a heat exchanger (13), and in particular an inlet temperature and/or an outlet temperature of the heat exchanger (13) represents the measured variable of the temperature control.

9. The method according to any one of the preceding claims, further comprising the steps of:
- removing residual material from the reactor (4), in particular by means of an immersion tube (18) in the reactor (4);
- recycling the removed residual material into the reactor (4).

10. The method according to any one of the preceding claims, wherein a fill level of the suspension (S) in the suspension container (2) is determined and a base material (B) and/or carrier fluid (W) are supplied to the suspension container (2) as a function of the determined fill level of the suspension (S), in particular when the fill level falls below a defined fill level limit value.

11. The method according to any one of the preceding claims, wherein the suspension (S) is supplied to the reactor (4) via a flooding 3/2-way valve (21), wherein a water line (22) for flooding the reactor (4) is connected to the flooding 3/2-way valve (21).

12. A device (1) for producing hydrogen (H) comprising:
- a suspension container (2) comprising a suspension (S) of a base material (B) comprising magnesium and a carrier fluid (W), in particular water;
- a base material conveying element (10) for supplying base material (B) to the suspension container (2);
- a carrier fluid conveying element (11) for supplying carrier fluid (W) to the suspension container (2);
- a storage container (3) having a pH-lowering liquid (F);
- a reactor (4);
- a suspension conveying element (5) configured to continuously supply the suspension (S) from the suspension container (2) to the reactor (4);
- an acid conveying element (6) configured to supply the pH-lowering liquid (F) to the reactor (4);
- wherein the reactor (4) comprises a gas outlet (8) for hydrogen (H) formed in the reactor (4) during a reaction of the base material (B) and the pH-lowering liquid (F).

13. The device (1) according to claim 12, wherein a mass flow meter (9) for measuring a mass flow of the hydrogen (W) is connected with the gas outlet (8) of the reactor (4).

14. The device (1) according to any one of claims 12 and 13, with a control unit configured to carry out the method according to any one of claims 1 to 18.

15. The device (1) according to any one of claims 12 to 14,
wherein the reactor comprises an outlet (17), in particular with an immersion tube (18), for removing residual material from the reactor (4), wherein the outlet (17) is connected with a residual material 3/2-way valve (19), wherein the residual material 3/2-way valve (19) is connected with a recycle line (20) for recycling the pH-lowering liquid to the reactor (4), and is preferably connected with a waste container (51); and/or
wherein the suspension conveying element (5) comprises a flooding 3/2-way valve (21) to which a water line (22) for flooding the reactor (4) is connected.

## Revendications

1. Procédé de production d'hydrogène (H), comprenant les étapes suivantes:
- prévoir un matériau de base (B) comprenant du magnésium;
- prévoir un fluide porteur (W), en particulier de l'eau;
- prévoir un liquide abaissant le pH (F);
- combiner le matériau de base (B) et le fluide porteur (W) dans un réservoir de suspension (2) pour former une suspension (S);
- introduire le liquide abaissant le pH (F) dans un réacteur (4);
- alimenter en continu la suspension (S) dans le réacteur (4);
- évacuer du réacteur (4) l'hydrogène (H) produit lors d'une réaction du matériau de base (B) et du liquide abaissant le pH (F) dans le réacteur (4).

2. Procédé selon l'une des revendications précédentes, dans lequel l'introduction du liquide abaissant le pH (F) dans le réacteur (4) s'effectue en continu.

3. Procédé selon la revendication 1 ou 2, le procédé comprenant en outre l'étape suivante:
- agiter la suspension (S) et le liquide abaissant le pH (F) dans le réacteur (4) avec un mélangeur de réacteur (7), dans lequel l'agitation est de préférence effectuée en continu et dans lequel la vitesse de rotation du mélangeur de réacteur (7) est de préférence constante.

4. Procédé selon la revendication 3, dans lequel une vitesse de rotation du mélangeur de réacteur (7) est régulée de sorte que la réaction du matériau de base (B) et du liquide abaissant le pH (F) pour produire de l'hydrogène (H) se déroule à une vitesse de réaction prédéterminée.

5. Procédé selon l'une des revendications précédentes, comprenant en outre l'étape suivante:
- déterminer un débit massique de l'hydrogène (H) évacué du réacteur (4).

6. Procédé selon la revendication 5, dans lequel le débit massique de l'hydrogène (H) évacué du réacteur (4) est régulé au moins par l'ajustement de l'alimentation de la suspension (S) dans le réacteur (4) selon une valeur de consigne de débit massique.

7. Procédé selon l'une des revendications 5 ou 6, dans lequel l'alimentation du liquide abaissant le pH (F) est contrôlée en fonction de l'alimentation de la suspension (S).

8. Procédé selon l'une des revendications précédentes, dans lequel la chaleur générée lors de la réaction dans le réacteur (4) est évacuée, pour quoi de préférence une température d'une enveloppe (14) du réacteur (4) est régulée, pour quoi de préférence un fluide de refroidissement est introduit dans l'enveloppe (14) au moyen d'un échangeur de chaleur (13) et en particulier une température d'entrée et/ou une température de sortie de l'échangeur de chaleur (13) constitue la variable mesurée pour la régulation de température.

9. Procédé selon l'une des revendications précédentes, comprenant en outre les étapes suivantes:
- évacuer des résidus du réacteur (4), en particulier au moyen d'un tube plongeur (18) dans le réacteur (4)
- de préférence recycler les résidus évacués dans le réacteur (4).

10. Procédé selon l'une des revendications précédentes, dans lequel un niveau de remplissage de la suspension (S) dans le réservoir de suspension (2) est déterminé et, en fonction du niveau de remplissage déterminé de la suspension (S), en particulier lorsqu'une valeur limite de niveau de remplissage définie est inférieure, le matériau de base (B) et/ou le fluide porteur (W) sont introduits dans le réservoir de suspension (2).

11. Procédé selon l'une des revendications précédentes, dans lequel la suspension (S) est introduite dans le réacteur (4) via une vanne 3/2 voies de remplissage (21), une conduite d'eau (22) pour le remplissage du réacteur (4) étant raccordée à la vanne 3/2 voies de remplissage (21).

12. Dispositif (1) pour la production d'hydrogène (H), comprenant:
- un réservoir de suspension (2) contenant une suspension (S) d'un matériau de base (B) comprenant du magnésium et d'un fluide porteur (W), en particulier de l'eau;
- un élément de transport de matériau de base (10) pour l'alimentation du matériau de base (B) dans le réservoir de suspension (2);
- un élément de transport de fluide porteur (11) pour l'alimentation du fluide porteur (W) dans le réservoir de suspension (2) ;
- un récipient de stockage (3) contenant un liquide abaissant le pH (F);
- un réacteur (4);
- un élément de transport de suspension (5) configuré pour alimenter en continu la suspension (S) du réservoir de suspension (2) vers le réacteur (4);
- un élément de transport d'acide (6) configuré pour alimenter le liquide abaissant le pH (F) dans le réacteur (4);
- le réacteur (4) comprenant une sortie de gaz (8) pour l'hydrogène (H) produit dans le réacteur (4) lors d'une réaction du matériau de base (B) et du liquide abaissant le pH (F).

13. Dispositif (1) selon la revendication 12, dans lequel un débitmètre massique (9) pour mesurer un débit massique de l'hydrogène (W) est connecté à la sortie de gaz (8) du réacteur (4).

14. Dispositif (1) selon l'une des revendications 12 et 13, comprenant une unité de commande configurée pour exécuter le procédé selon l'une des revendications 1 à 18.

15. Dispositif (1) selon l'une des revendications 12 à 14,
dans lequel le réacteur comprend une sortie (17), en particulier avec un tube plongeur (18), pour évacuer des résidus du réacteur (4), dans lequel la sortie (17) est connectée à une vanne 3/2 voies de résidus (19), dans lequel la vanne 3/2 voies de résidus (19) est connectée à une conduite de retour (20) pour recycler le liquide abaissant le pH vers le réacteur (4) et de préférence à un récipient de résidus (51), et/ou
dans lequel l'élément de transport de suspension (5) comprend une vanne 3/2 voies de remplissage (21) à laquelle est raccordée une conduite d'eau (22) pour l'inondation du réacteur (4).
